# EUROPÄISCHE PATENTSCHRIFT

(11) **EP 0 503 245 B1**
(45) Veröffentlichungstag und Bekanntmachung des Hinweises auf die Patenterteilung: **08.03.1995**
(21) Anmeldenummer: 92101051.8
(22) Anmeldetag: 23.01.1992
(51) Int. Cl.: G01B 5/06, G01B 7/06, F16D 66/00

(54) **Stationäre Einrichtung und Verfahren zur Verschleiss- und Dickenmessung an Bremsbelägen von Scheibenbremsen**
Stationary device and procedure for measuring wear and thickness at brake pads of disc brakes
Appareil stationnaire et procédé pour la mesure de l'usure et de l'épaisseur des garnitures de freins à disque

(30) Priorität: 08.03.1991 DE 4107471
(43) Veröffentlichungstag der Anmeldung: 16.09.1992
(73) Patentinhaber: Dr.Ing.h.c. F. Porsche Aktiengesellschaft, 70435 Stuttgart (DE)
(72) Erfinder: Roland, Martin, W-7251 Weissach (DE)

(56) Entgegenhaltungen:
- EP-A- 0 260 583
- EP-A- 0 391 047
- DE-A- 2 429 884
- DE-A- 3 733 617
- DE-U- 9 007 052

## Beschreibung

Die Erfindung betrifft eine Vorrichtung und ein Verfahren zur Verschleiß-und Dickenmessung an Bremsbelägen von Scheibenbremsen.

Es ist eine Verschleißmessung von Bremsbelägen mit einer Mikrometerschraube bekannt, bei der die Meßergebnisse jedoch, sei es durch Verkanten und/oder durch Abweichungen in der Lage des Meßpunktes fehlerhaft sein können.

Aus der DE-A1-32 16 401 ist eine Schublehre, insbesondere zum unmittelbaren Ablesen der Reibbelagdicke von Bremsbelägen von Scheibenbremsen bekannt, die eine verschiebbare Maßskala aufweist. Diese Maßskala kann entsprechend der Belagträgerplattendicke eingestellt werden, so daß nach erfolgter Messung an dieser Maßskala direkt die noch vorhandene Reibbelagdicke abgelesen werden kann.

Ferner geht aus der EP-A 0 391 047 ein Verfahren für die Bremsenprüfung und -überwachung bei Schienenfahrzeugen sowie eine Vorrichtung hierzu hervor, bei dem zur Ermittlung des Verschleißes eines Bremsbelages die sich im Betrieb ergebenden Nachstellwege an einem Bremsbelag addiert werden.

Schließlich ist aus der DE-A-2 429 884 ein ortsveränderliches Längenmeßgerät bekannt, das einen in Z-Richtung bewegbaren Meßtaster aufweist und mit einer elektronischen Steuervorrichtung verbunden ist.

Aufgabe der Erfindung ist es, eine Vorrichtung und ein Verfahren zu schaffen, mit der bzw. mit dem die Meßgenauigkeit bei einer Verschleiß- und Dickenmessung an Bremsbelägen erhöht wird.

Diese Aufgabe wird erfindungsgemäß durch die kennzeichnenden Merkmale des Patentanspruches 1 und 6 gelöst. Weitere, die Erfindung ausgestaltende Merkmale beinhalten die abhängigen Ansprüche.

Die mit der Erfindung erzielten Vorteile sind vor allem in der sicheren und standartisierten Erfassung von Meßwerten zu sehen. Durch die Verwendung eines kreuzförmig geführten Schlittens mit senkrecht darüberstehendem Meßtaster treten insbesondere keine Meßfehler durch ein Verkanten auf. Die relevanten Meßpunkte werden exakt und mit großer Wiederholgenauigkeit angefahren, so daß die Messungen reproduzierbar sind.

Durch die Aufnahmeeinrichtung können ohne nennenswerte Umrüstzeit verschiedene Bremsbelagtypen vermessen werden.

Durch die Verwendung eines Rechners für die Steuerungs- und Auswertung wird die Meßgeschwindigkeit wesentlich erhöht. Gleichzeitig steigt die Meßsicherheit, da Ablesefehler verringert und Fehler beim Auswerten der Meßergebnisse durch die Automatisierung vermieden werden.

Das Verfahren zum Betreiben der Vorrichtung zeichnet sich insbesondere dadurch aus, daß mit nur vier Meßpunkten am Bremsbelag der mittlere Dickenverschleiß, der Radial-Schrägverschleiß und der Tangential-Schrägverschleiß bestimmt werden können.

Die Erfindung wird nachstehend anhand der in den Zeichnungen dargestellten Ausführungsformen näher erläutert.

Es zeigen:
- Fig. 1: eine Ansicht einer erfindungsgemäßen Meßvorrichtung,
- Fig. 2: eine Ansicht einer Aufnahmeeinrichtung der in Fig. 1 dargestellten Vorrichtung mit einem Bremsbelag und
- Fig. 3: eine Anordnung von Meßpunkten auf der Oberfläche eines Bremsbelages gemäß Fig. 2.

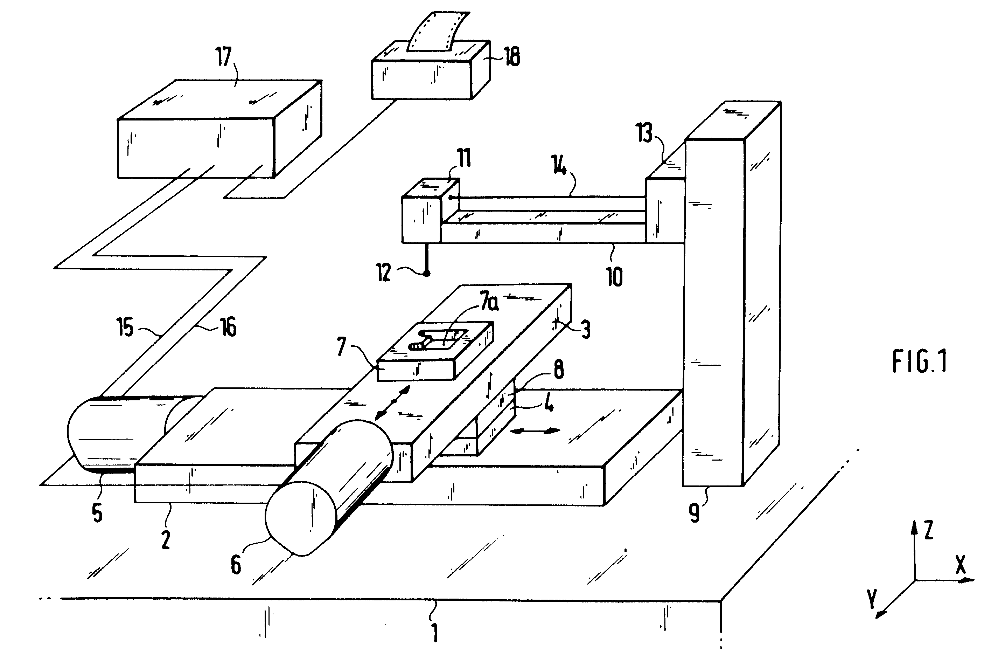

Die in Fig. 1 dargestellte Vorrichtung besteht im wesentlichen aus einem Aufnahmetisch 1, auf dem ein erstes Führungselement 2 in X-Richtung montiert ist. Eine zweites Führungselement 3 ist in Y-Richtung auf einem Schlitten 4 des ersten Führungselementes 2 befestigt. Beide Führungselemente sind über Spindeln von Schrittmotoren 5, 6 angetrieben, die mit Positionsgebern ausgestattet sind. Eine Aufnahmeeinrichtung 7 ist auf einem Schlitten 8 des Führungselementes 3 angeordnet. Darüber hinaus ist an einer Stirnseite des ersten Führungselementes 2 auf der Grundplatte eine Säule 9 befestigt. Von dieser erstreckt sich parallel zum Führungselement 2 ein Kragarm 10. Dieser trägt einen Meßtaster 11, dessen Tastspitze 12 mittig über dem ersten Führungselement 2 liegt. Die Tastspitze 12 ist federbelastet und wird von einem Antrieb 13 und einem Übertragungselement 14 angehoben.

Die Schrittmotoren 5 und 6 sind mittels zweier Leitungsbündel 15, 16 mit einer Steuereinheit 17 verbunden. Ebenfalls an die Steuereinheit 17 ist ein Drucker 18 angeschlossen.

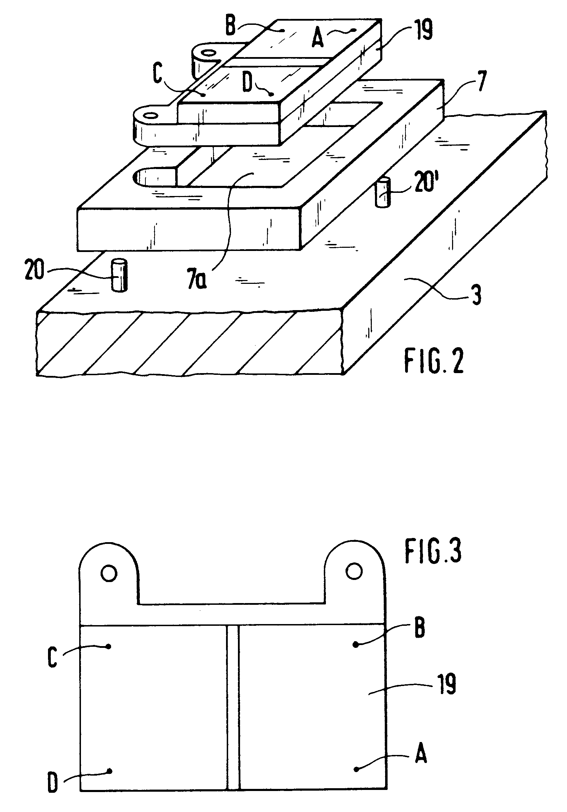

Fig. 2 zeigt die als Rahmen ausgeführte Aufnahmeeinrichtung 7 mit einer Ausnehmung 7a, deren Innenkontur der Außenkontur eines Bremsbelages 19 bzw. eines Bremsbelagträgers entspricht. Sie ist mit dem Schlitten 8 formschlüssig durch mindestens zwei Paßstifte 20 und 20' verbunden.

Zur Messung wird in die Aufnahmeeinrichtung 7 ein Bremsbelag 19 eingelegt und der Steuereinheit 17 wird in einer Startprozedur die Versuchsnummer und die Art des Bremsbelages 19 eingegeben. Die Steuereinheit 17 hebt zunächst über den Antrieb 13 und das Übertragungselement 14 die Tastspitze 12 des Meßtasters 11 an, bevor es über die Leitungsbündel 15 und 16 sowie die Schrittmotoren 5 und 6 die Schlitten 4 und 8 so bewegt, daß zunächst ein in der Nähe einer ersten Ecke des Bremsbelages 19 liegender Punkt, z. B. A, unter der Tastspitze 12 zu liegen kommt. Der Antrieb 13 wird nun stromlos geschaltet, so daß sich die Tastspitze 12 federgetrieben auf die Oberfläche des Bremsbelages 19 absenkt. Das Steuergerät 17 liest die Stellung des Meßtasters ab und speichert den Wert. Ebenso werden die Punkte B bis D in der Nähe der verbleibenden drei Ecken des Bremsbelages 19 vermessen und die Werte gespeichert.

Der Bremsbelag 19 wird nun einer Belastung unterzogen. Im Anschluß hieran wird die Meßprozedur wiederholt. Das Steuergerät 17 wertet die gespeicherten Werte nun wie folgt aus:
- In einem ersten Schritt wird für jeden Punkt der Verschleiß als Differenz des Wertes vor der Belastung zu dem Wert nach der Belastung gebildet.
- In einem zweiten und einem dritten Schritt werden die Differenzen der Verschleißwerte an den in Fig. 4 mit A und B bzw. C und D bezeichneten Punkten gebildet und damit der Radial-Schrägverschleiß berechnet.
- In einem vierten und einem fünften Schritt werden die Differenzen der Verschleißwerte an den mit A und D bzw. B und C bezeichneten Punkten gebildet und damit der Tangential-Schrägverschleiß berechnet.
- In einem sechsten Schritt wird der mittlere Gesamtverschleiß als Mittelwert der vier Verschleißwerte berechnet.
- In einem siebten Schritt wird ein Protokoll erstellt und über den Drucker ausgegeben, das die Versuchsdaten, die gespeicherten Meßwerte, die berechneten Verschleißwerte sowie die berechneten Werte für den Schrägverschleiß enthält.

## Patentansprüche

1. Vorrichtung zur Verschleiß- und Dickenmessung an Bremsbelägen von Scheibenbremsen für Fahrzeuge mit einem Meßtaster (11), der zur Erfassung eines Dicken- oder Verschleißwertes des Bremsbelages (19) in Z-Richtung bewegbar ist, **dadurch gekennzeichnet**, daß die Vorrichtung einen Aufnahmetisch (1) mit einem in Führungselementen (2, 3) in X- und Y-Richtung verstellbaren Schiffen (8) umfaßt, der eine Aufnahmeeinrichtung (7) für den Bremsbelag (19) aufweist, oberhalb dieses Belages zur Verschleiß- und Dickenmessung der Meßtaster (11) angeordnet ist.

2. Vorrichtung nach Anspruch 1, dadurch gekennzeichnet, daß die Aufnahmeeinrichtung (7) eine Ausnehmung (7a) mit einer Innenkontur aufweist, die der Außenkontur des Bremsbelages (19) bzw. der Außenkontur eines Bremsbelagträgers entspricht, wobei die Aufnahmeeinrichtung (7) mit dem Schlitten (8) lösbar verbunden ist.

3. Vorrichtung nach einem oder mehreren der vorhergehenden Ansprüche, dadurch gekennzeichnet, daß die Lage der zu erfassenden Punkte (A bis D) so gewählt ist, daß ein Dickenwert des Bremsbelages (19) in Z-Richtung und eine Lage der Oberfläche des Bremsbelages (19) relativ zur XY-Ebene feststellbar ist.

4. Vorrichtung nach einem oder mehreren der vorhergehenden Ansprüche, dadurch gekennzeichnet, daß zur Steuerung des Schlittens (8) und zur Erfassung und Speicherung der vom Meßtaster (11) gelieferten Meßwerte eine programmierbare elektronische Steuereinheit (17) verwendet wird.

5. Vorrichtung nach Anspruch 4, dadurch gekennzeichnet, daß zur Protokollierung der Meßergebnisse und zur Ausgabe der Verschleißwerte ein Drucker (18) mit der Steuereinheit (17) verbunden ist.

6. Verfahren zum Betreiben einer Vorrichtung nach den Ansprüchen 1 bis 5, **gekennzeichnet** durch folgende Schritte:
- in einem ersten Schritt werden vier auf der Oberfläche und in der Nähe der Ecken des Bremsbelages liegende Punkte angefahren, ihre Lage in Z-Richtung wird vermessen und gespeichert,
- in einem zweiten Schritt wird ein Verschleißwert als Differenz jedes so gewonnenen Meßwertes mit einem vor der Verschleißbeanspruchung gewonnenen und gespeicherten Meßwert berechnet,
- in einem dritten Schritt wird der Mittelwert der Verschleißwerte als Maß für den mittleren Dickenverschleiß des Bremsbelages ermittelt,
- in einem vierten Schritt wird die Differenz der Verschleißwerte je zweier radial zur Bremsscheibe übereinander liegender Punkte als Maß für den Radial-Schrägverschleiß ermittelt und
- in einem fünften Schritt wird die Differenz der Verschleißwerte je zweier tangential zur Bremsscheibe übereinanderliegender Punkte als Maß für den Tangential-Schrägverschleiß ermittelt.

## Claims

1. A device for measuring the wear and thickness of brake linings of disc brakes for vehicles with a measuring sensor (11) movable in the Z direction in order to determine a thickness or wear value of the brake lining (19), **characterized in that** the device comprises a holding table (1) with a slide (8) displaceable in guide members (2, 3) in the X and Y directions and having a holding device (7) for the brake lining (19), [and] the measuring sensor (11) is arranged above the said lining for measuring the wear and thickness.

2. A device according to Claim 1, **characterized in that** the holding device (7) has a recess (7a) with an internal profile corresponding to the external profile of the brake lining (19) or to the external profile of a brake-lining support, wherein the holding device (7) is detachably connected to the slide (8).

3. A device according to one or more of the preceding Claims, **characterized in that** the position of the points (**A** to **D**) to be determined is selected in such a way that it is possible to establish one thickness value of the brake lining (19) in the Z direction and one position of the surface of the brake lining (19) relative to the XY plane.

4. A device according to one or more of the preceding Claims, **characterized in that** a programmable electronic control unit (17) is used for controlling the slide (8) and for determining and storing the measurement values supplied by the measuring sensor (11).

5. A device according to Claim 4, **characterized in that** a printer (18) is connected to the control unit (17) in order to log the measurement results and to display the wear values.

6. A method of operating the device according to Claims 1 to 5, **characterized by** the following steps:
- in a first step four points arranged on the surface and in the vicinity of the corners of the brake lining are traversed, and the position thereof in the Z direction is measured and stored,
- in a second step a wear value is calculated as a difference between each measurement value obtained in this way and a measurement value obtained and stored before wear,
- in a third step the mean value of the wear values is determined as a measurement for the mean wear in thickness of the brake lining,
- in a fourth step the difference between the wear values of two respective points situated one above the other radially of the brake disc is determined as a measurement for the radial oblique wear, and
- in a fifth step the difference of the wear values between two respective points situated one above the other tangentially to the brake disc is determined as a measurement for the tangential oblique wear.

## Revendications

1. Dispositif de mesure d'usure et d'épaisseur de garnitures de freins à disque pour véhicule automobile, comportant un palpeur de mesure (11), qui est déplaçable dans la direction Z pour détecter les valeurs d'épaisseur ou d'usure de la garniture de frein (19), caractérisé en ce que le dispositif comporte une table de réception (1) avec un chariot (8) déplaçable dans des éléments de guidage (2, 3) dans les direction X et Y, lequel chariot comporte un dispositif de réception (7) de la garniture de frein (19), le palpeur de mesure (11) étant placé au-dessus de cette garniture en vue de la mesure de l'usure et de l'épaisseur.

2. Dispositif selon la revendication 1, caractérisé en ce que le dispositif de réception (7) présente un évidement (7a) à contour intérieur, qui correspond au contour extérieur de la garniture de frein (19) ou au contour extérieur d'un support de garniture de frein, le dispositif de réception (7) étant relié de manière amovible au chariot (8).

3. Dispositif selon une ou plusieurs des revendications précédentes, caractérisé en ce que la position des points (A à D) à détecter est choisie de manière qu'une valeur d'épaisseur de la garniture de frein (19) puisse être constatée dans la direction Z et une position de la surface de la garniture de frein (19) puisse être constatée par rapport au plan XY.

4. Dispositif selon une ou plusieurs des revendications précédentes, caractérisé en ce que pour la commande du chariot (8) et pour la détection et la mémorisation des valeurs de mesure fournies par le palpeur de mesure (11), on a recours à une unité de commande électronique (17) programmable.

5. Dispositif selon la revendication 4, caractérisé en ce que pour l'impression en listes des résultats des mesures pour l'édition des valeurs d'usure, une imprimante (18) est connectée à l'unité de commande (17).

6. Procédé d'exploitation d'un dispositif selon les revendications 1 à 5, caractérisé par les étapes suivantes :
- au cours d'une première étape, quatre points situés sur la surface et à proximité des angles de la garniture de frein sont approchés, leur position dans la position Z est mesurée et mémorisée,
- au cours d'une deuxième étape, une valeur d'usure est calculée en tant que différence entre chaque valeur de mesure ainsi obtenue et une valeur de mesure obtenue et mémorisée avant l'usure,
- au cours d'une troisième étape, la valeur moyenne des valeurs d'usure est déterminée en tant que critère de l'usure moyenne de l'épaisseur de la garniture de frein,
- au cours d'une quatrième étape, la différence des valeurs d'usure de deux points situés radialement l'un au-dessus de l'autre par rapport au disque de frein est déterminée en tant que critère de l'usure oblique radiale et
- dans une cinquième étape, la différence des valeurs d'usure de deux points superposés tangentiellement au disque de frein, est déterminée en tant que critère de l'usure oblique tangentielle.
